# FASCICULE DE BREVET EUROPEEN

(11) **EP 2 760 684 B1**
(45) Date de publication et mention de la délivrance du brevet: **27.04.2016**
(21) Numéro de dépôt: 12732688.2
(22) Date de dépôt: 31.05.2012
(51) Int. Cl.: B60H 1/00

(54) **CONDUIT D'AIR FUSIBLE POUR AGENCEMENT DE PLANCHE DE BORD**
SCHMELZBARER LUFTKANAL FÜR EIN ARMATURENBRETT
FUSIBLE AIR DUCT FOR EQUIPPING DASHBOARD

(30) Priorité: 26.09.2011 FR 1158538
(43) Date de publication de la demande: 06.08.2014
(73) Titulaire: Renault S.A.S., 92100 Boulogne-Billancourt (FR)
(72) Inventeur: BEAUDON, Dominique, F-78910 Tacoignieres (FR)
(86) Numéro de dépôt international: PCT/FR2012/051214
(87) Numéro de publication internationale: WO 2013/045773

(56) Documents cités:
- JP-A- 10 058 951
- JP-A- 2001 080 343
- JP-A- 2004 058 682
- JP-A- 2007 076 471
- JP-A- 2009 167 840
- US-A1- 2003 232 591

## Description

### Domaine technique de l'invention

L'invention concerne le domaine des conduits de passage d'air, notamment utilisés dans le cadre d'agencements de planches de bord de véhicules automobiles.

L'invention a pour objet plus particulièrement un conduit de passage d'air, un agencement pour véhicule automobile comprenant au moins un tel conduit, un véhicule automobile et un procédé de dissipation d'énergie transmise par un genou sur une peau de planche de bord d'un tel agencement.

### État de la technique

Dans les agencements de planches de bord pour véhicules automobiles, il est fréquent de disposer un ou plusieurs conduit(s) de passage d'air, notamment connectés à des dispositifs de chauffage, ventilation et climatisation aussi appelé HVAC (pour « Heating, Ventilation and Air conditioning » en terminologie anglo-saxonne), derrière une peau de planche de bord assurant la finition accessible depuis l'habitacle.

La qualité d'absorption d'un choc appliqué par un genou d'une personne contre la planche de bord et l'importance et la gravité des traumatismes causés sur le genou sont devenus des critères de jugement de la sécurité conférée par un véhicule automobile.

Il a déjà été imaginé de réaliser des conduits d'air obtenus par soufflage, présentant l'avantage d'une déformabilité suffisante pour se déformer sous le choc du genou.

Toutefois, l'implantation de tels conduits d'air reste parfois impossible, et ils sont alors remplacés par des conduits de passage d'air obtenus par injection de matière qui présentent la particularité d'une grande rigidité. De tels conduits rigides peuvent être solidarisés aux autres éléments de l'agencement, notamment au HVAC, par l'intermédiaire de solutions de clipsage avec des éléments de fixation par encliquetage. Ce type de montage permet de s'affranchir des vis de fixation traditionnellement utilisées. De plus, un jeu vis-à-vis des autres éléments périphériques de l'agencement peut être prévu pour éviter les contraintes mécaniques sur le conduit.

Mais la qualité d'absorption d'un choc appliqué par un genou d'une personne contre la planche de bord lorsqu'un tel conduit rigide est implanté derrière la peau de la planche de bord est très médiocre et l'importance et la gravité des traumatismes causés au genou risquent, pour cette raison, d'être très élevés.

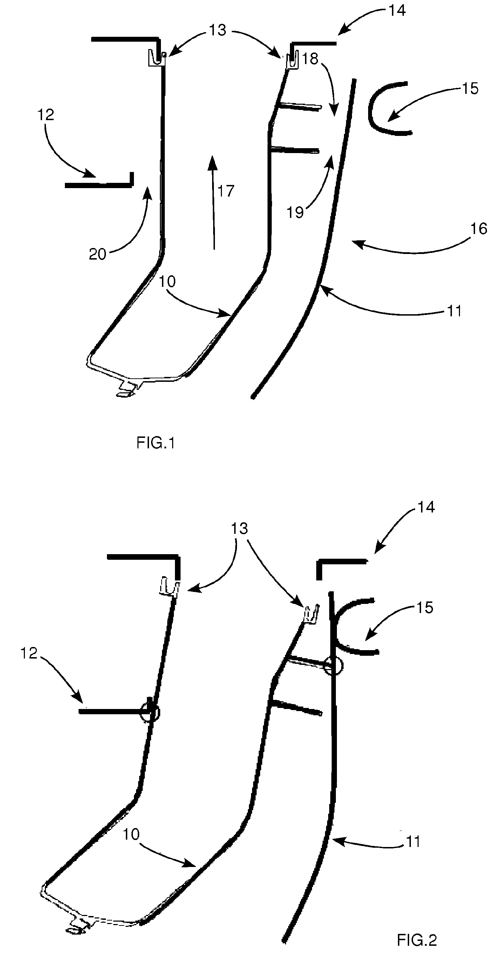

En effet, dans le cas d'un choc de genou sur la peau d'une planche de bord (la figure 1 illustre l'agencement avant le choc), la seule possibilité de dissipation de l'énergie transmise par le genou se pratique de la manière suivante, jusqu'à aboutir à la configuration de la figure 2 à l'issue du choc :
- déformation et/ou déplacement de la peau de planche de bord 11, en direction d'une béquille d'arrêt incompressible 12,
- puis entrée en contact de la peau de planche de bord 11 avec le conduit de passage d'air 10,
- puis rupture d'éléments de fixation par encliquetage 13 du conduit de passage d'air 10 sur un dispositif de chauffage, ventilation et climatisation HVAC repéré 14,
- puis déplacement, en direction de la béquille d'arrêt incompressible 12, du conduit de passage d'air 10 entraîné par la déformation et/ou le déplacement de la peau de planche de bord 11,
- puis entrée en contact du conduit de passage d'air 10 avec la béquille d'arrêt incompressible 12.
En pratique, il est fréquent que l'énergie transmise par le genou soit très supérieure à cette capacité maximale d'absorption ou dissipation d'énergie décrite ci-dessus. Ainsi dans le cas de la figure 2, si la dissipation d'énergie n'est pas terminée, le conduit 10 rigide étant en butée contre la béquille 12, c'est le genou 15 de la personne qui encaissera ensuite le reste de la dissipation d'énergie, occasionnant potentiellement des blessures et des lésions aux membres du conducteur ou du passager.
Il existe ainsi un réel besoin de fournir un conduit rigide de passage d'air, conçu notamment en vue d'utilisations dans des agencements pour véhicule automobile, qui permette de répondre à l'ensemble de ces problématiques sécuritaires.
Les seules solutions connues, à l'image des documents JP10-058951 et JP2011042254A, concernent des structures particulières de peaux de planche de bord pour leur conférer des caractéristiques améliorées sous choc de genou, mais ces solutions n'apportent pas de remède vis-à-vis des problématiques qui concernent les conduits de passage d'air « injectés » rigides.

Par ailleurs, le document JP 2007 076471 A divulgue un conduit de passage d'air comprenant au moins une zone sécable à rupture contrôlée configurée pour se rompre sous l'application au conduit d'un effort tranchant prédéterminé orienté sensiblement orthogonalement par rapport à l'orientation du conduit.

### Objet de l'invention

Le but de la présente invention est de proposer un conduit de passage d'air qui remédie aux inconvénients listés ci-dessus, notamment améliorant la sécurité conférée vis-à-vis des personnes.

Un premier aspect de l'invention concerne un conduit de passage d'air qui comprend au moins une zone sécable à rupture contrôlée configurée pour se rompre sous l'application au conduit d'un effort tranchant prédéterminé orienté sensiblement orthogonalement par rapport à l'orientation du conduit, le conduit de passage d'air comprenant en outre des éléments de fixation par encliquetage à un dispositif de chauffage, ventilation et climatisation, ces éléments de fixation étant configurés pour se rompre sous l'application au conduit d'un effort tranchant prédéterminé orienté sensiblement orthogonalement par rapport à l'orientation du conduit, cet effort étant inférieur à l'effort tranchant prédéterminé de rupture des zones sécables. Chaque zone sécable peut être obtenue par réduction locale de l'épaisseur d'une paroi du conduit. Des éléments de fixation par encliquetage (autrement appelées par clipsage ou par clippage) remplacent très avantageusement des vis traditionnellement utilisées pour ce type d'assemblage (gain économique, gain de temps de vissage, souplesse tolérant de faibles tensions, et aptitude de ces fixations à être rompues à partir d'un seuil d'effort déterminé). Le conduit de passage d'air suivant l'invention permet de dissiper l'énergie du choc entre le genou et le conduit suivant deux phases successives, qui s'adaptent parfaitement à la dynamique du choc, la première phase correspondant à la rupture des moyens d'encliquetage, entraînant un déplacement du conduit, puis une seconde phase correspondant à la rupture de la zone sécable prévue sur la paroi du conduit lorsque le conduit est bloqué dans son déplacement.

Les réductions locales d'épaisseur peuvent être agencées sous forme de sillons creusés dans l'épaisseur de la paroi du conduit, notamment depuis les faces extérieures du conduit.

Les sillons sont notamment agencés en quadrillage de manière à délimiter entre eux des facettes.

Des zones sécables à rupture contrôlée peuvent être prévues sur toutes les parois du conduit, notamment réparties de manière homogène sur la totalité de chacune des parois.

Le conduit de passage d'air peut être formé dans une matière rigide, notamment par injection d'une matière plastique, par exemple du polypropylène.

Un deuxième aspect de l'invention concerne un agencement pour véhicule automobile, comprenant au moins un tel conduit de passage d'air, disposé entre une peau de planche de bord d'un habitacle du véhicule et une béquille d'arrêt incompressible, de sorte que la direction générale allant de la peau de planche de bord vers la béquille est sensiblement orthogonale par rapport à l'orientation du conduit.

Un jeu peut être interposé entre la peau de planche de bord et le conduit de passage d'air et un jeu peut être interposé entre le conduit de passage d'air et la béquille d'arrêt incompressible.

L'agencement peut comprendre un dispositif de chauffage, ventilation et climatisation auquel le conduit de passage d'air est raccordé par une extrémité au moyen des éléments de fixation par encliquetage.

Le conduit de passage d'air peut être équipé d'au moins une nervure externe orientée en direction de la peau de planche de bord.

Un troisième aspect de l'invention concerne un véhicule automobile comprenant un tel agencement et/ou un tel conduit de passage d'air.

Un quatrième aspect de l'invention concerne un procédé de dissipation d'énergie transmise par un genou sur une peau de planche de bord d'un tel agencement, qui comprend une étape de fracture au moins partielle du conduit de passage d'air au niveau de l'une au moins de ses zones sécables à rupture contrôlée, résultant de l'application par la peau de planche de bord, elle-même pressée par le genou, d'un effort tranchant orienté sensiblement orthogonalement par rapport à l'orientation du conduit et supérieur à l'effort tranchant prédéterminé contrôlant la rupture des zones sécables.

Le procédé peut comprendre les étapes préalables successives de :
- déformation et/ou déplacement de la peau de planche de bord, en direction de la béquille d'arrêt incompressible,
- entrée en contact de la peau de planche de bord avec le conduit de passage d'air,
- rupture d'éléments de fixation par encliquetage du conduit de passage d'air sur un dispositif de chauffage, ventilation et climatisation,
- déplacement, en direction de la béquille d'arrêt incompressible, du conduit de passage d'air entraîné par la déformation et/ou le déplacement de la peau de planche de bord,
- entrée en contact du conduit de passage d'air avec la béquille d'arrêt incompressible.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 et 2 sont des vues, respectivement avant et après un choc de genou, d'un agencement selon l'art antérieur,
- la figure 3 est une vue de face d'un exemple de conduit de passage d'air selon le premier aspect de l'invention,
- la figure 4 illustre une coupe du conduit de la figure 3 au niveau de l'une de ses parois,
- les figures 5 à 7 sont des vues, respectivement avant, pendant et après un choc du genou, d'un exemple d'agencement selon le deuxième aspect de l'invention.

### Description de modes préférentiels de l'invention

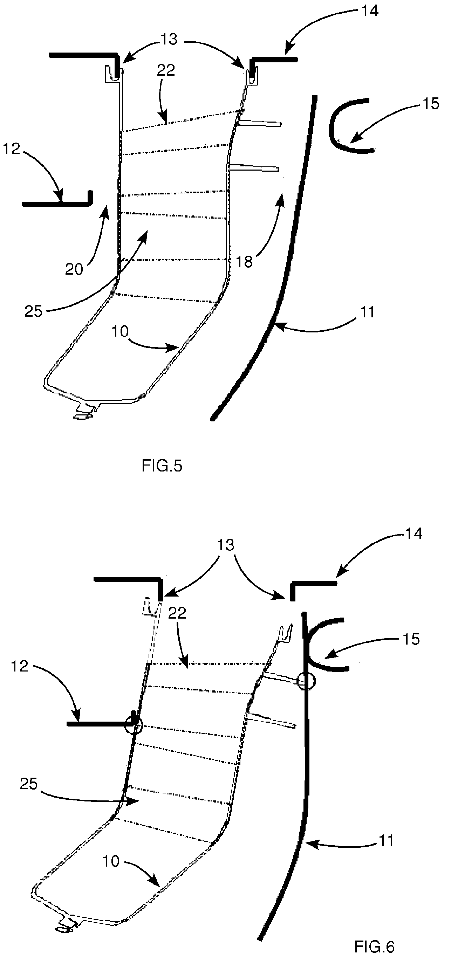

Les figures 5 à 7 représentent un agencement pour véhicule automobile. Les mêmes références ont été conservées depuis les figures 1 et 2 pour les éléments ayant la même dénomination. Ainsi l'agencement comprend au moins un conduit de passage d'air 10, disposé entre une peau de planche de bord 11 d'un habitacle du véhicule et une béquille d'arrêt incompressible 12. La disposition, notamment l'orientation de la longueur, du conduit 10 est prévue de sorte que la direction générale 16 allant de la peau de planche de bord 11 vers la béquille 12 est sensiblement orthogonale par rapport à l'orientation 17 du conduit 10. Autrement dit, l'orientation 17 du conduit 10, laquelle peut être variable spatialement en fonction de l'abscisse curviligne le long du conduit 10, est globalement incluse dans un plan sensiblement perpendiculaire à la direction générale 16 allant de la peau 11 vers la béquille 12 qui est globalement orientée horizontalement d'arrière vers l'avant du véhicule automobile incorporant cet agencement.

Un jeu 18 peut avantageusement être interposé entre la peau de planche de bord 11 et le conduit de passage d'air 10. En particulier le conduit de passage d'air 10 peut être équipé d'au moins une nervure externe 19, qui peut être imposée par des contraintes d'architecture et qui doit être prise en compte dans la détermination de la valeur du jeu 18, orientée en direction de la peau de planche de bord 11, sensiblement selon la direction générale 16. Dans ce cas particulier, le jeu 18 sera prévu entre l'extrémité distale libre de la nervure 19 et le côté intérieur de la peau 11.

Un jeu 20 peut avantageusement être interposé entre le conduit de passage d'air 10 et la béquille d'arrêt incompressible 12.

Les jeux 18, 20 vis-à-vis des autres éléments périphériques de l'agencement (peau 11 et béquille 12 notamment) sont prévus pour éviter les contraintes mécaniques sur le conduit 10.

L'agencement comprend également un dispositif de chauffage, ventilation et climatisation HVAC repéré 14 auquel le conduit de passage d'air 10 est raccordé par une extrémité au moyen d'éléments de fixation par encliquetage 13 configurés pour se rompre sous l'application au conduit 10 d'un effort tranchant prédéterminé orienté sensiblement orthogonalement par rapport à l'orientation 17 du conduit 10. De tels éléments de fixation par encliquetage 13 remplissent une fonction de clipsage du conduit 10 sur une embouchure du dispositif HVAC 14, ce dernier étant destiné à alimenter ou extraire de l'air grâce au conduit 10.

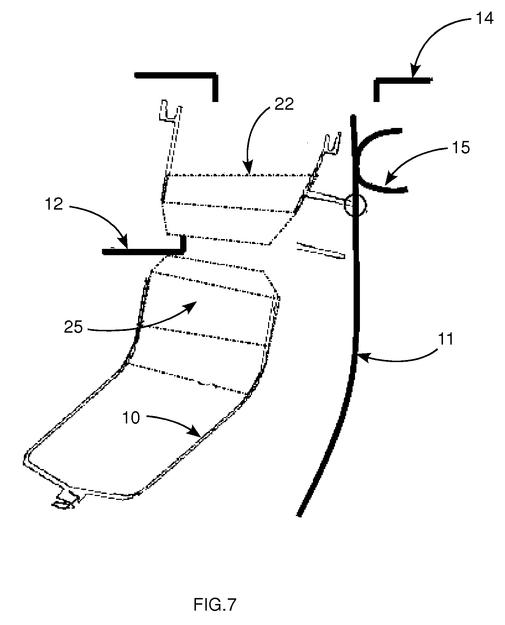

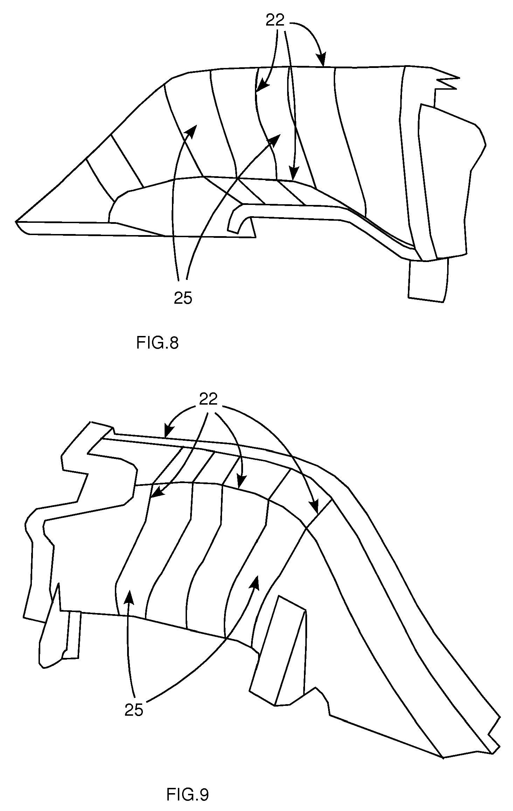

Le concept de l'invention repose sur le fait que le conduit de passage d'air 10 comprend au moins une zone sécable à rupture contrôlée configurée pour se rompre sous l'application au conduit 10 d'un effort tranchant prédéterminé orienté sensiblement orthogonalement par rapport à l'orientation 17 du conduit. Ainsi si un effort tranchant globalement orienté dans la direction générale 16 et présentant une valeur supérieure à l'effort tranchant prédéterminé est réellement appliqué au conduit 10, ce dernier va se rompre en un endroit de sa longueur, pour se séparer comme l'illustre la figure 7 en au moins deux tronçons.

Ces dispositions ont pour avantage de fournir un conduit de passage d'air apte à se rompre facilement lors d'un impact de la peau 11 induit par un choc de genou 15.

Notamment, les éléments de fixation par encliquetage peuvent être configurés de sorte que leur effort tranchant de rupture soit inférieur à l'effort tranchant prédéterminé de rupture des zones sécables.

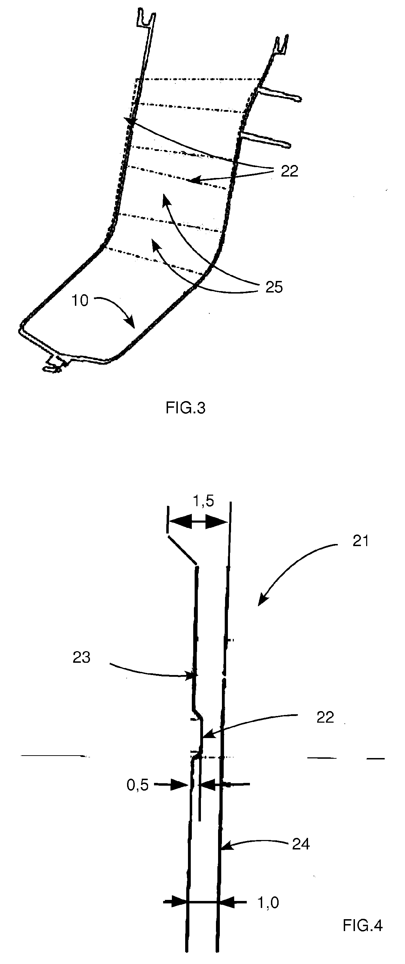

En référence aux figures 3 et 4 notamment, chaque zone sécable est obtenue par réduction locale de l'épaisseur d'une paroi 21 du conduit. Les réductions locales d'épaisseur sont agencées sous forme de sillons 22 creusés dans l'épaisseur de la paroi 21 du conduit 10, notamment depuis les faces extérieures 23 du conduit 10. Toutefois les sillons 22 peuvent éventuellement être creusés depuis les faces internes 24 du conduit 10. D'autre part, les zones sécables peuvent alternativement être obtenues par des enlèvements locaux de matière, notamment sur toute l'épaisseur de paroi 21. Par rapport aux solutions connues de conduit 10 rigide obtenu par injection pour lesquelles l'épaisseur de paroi 21 est supérieure à 1,5 mm, l'épaisseur du conduit 10 présentement décrit est localement nettement inférieure, notamment de l'ordre de 1 mm pour favoriser sa rupture sous effort tranchant. La profondeur des sillons 22 peut être de l'ordre de 0,3 à 0,5 mm.

Les sillons 22 peuvent avantageusement être agencés en quadrillage de manière à délimiter entre eux des facettes 25. Notamment le conduit 10 peut présenter des sillons 22 sensiblement orientés dans la longueur du conduit 10 et des sillons 22 sensiblement aménagés de manière annulaire autour du conduit 10, sensiblement dans le plan local perpendiculaire à l'orientation 17. Les facettes 25 peuvent ne pas être planes et au contraire présenter toute forme gauche, et sont définies par un pourtour constitué d'un enchainement fermé de sillons 22.

Par ailleurs, des zones sécables à rupture contrôlée peuvent avantageusement être prévues sur toutes les parois 21 du conduit 10, et notamment réparties de manière homogène sur la totalité de chacune des parois 21. Ces dispositions améliorent les caractéristiques de casse du conduit 10 sous l'effet d'un effort tranchant.

Les dispositions ci-dessus ont notamment vocation à être appliquées dans le cas où le conduit de passage d'air 10 est formé dans une matière rigide, notamment par injection d'une matière plastique, par exemple du polypropylène.

L'invention concerne aussi en tant que tel un véhicule automobile comprenant un agencement et/ou un conduit de passage d'air 10 tels que mentionnés ci-dessus.

En cas de choc de genou 15 sur la peau de planche de bord 11 sur un agencement tel que sur la figure 5 (avant choc), la dissipation d'énergie transmise par le genou 15 sur la peau 11 comprend les étapes successives suivantes de :
- déformation et/ou déplacement de la peau 11, en direction de la béquille 12, en réduisant le jeu 18 au fur et à mesure,
- entrée en contact de la peau 11 avec le conduit 10,
- rupture des éléments de fixation 13 du conduit 10 sur le dispositif HVAC 14 en raison de l'effort tranchant subi par le conduit 10,
- déplacement, en direction de la béquille 12, du conduit 10 entraîné par la déformation et/ou le déplacement de la peau 11, en réduisant le jeu 20,
- entrée en contact du conduit 10 avec la béquille 12.

A l'issue de ces étapes préalables de dissipation, équivalentes aux possibilités de dissipation ou absorption d'énergie connues de l'art antérieur, l'agencement adopte la configuration de la figure 6.

Puis le procédé de dissipation d'énergie grâce à un agencement tel que décrit ci-dessus et comprenant au moins un conduit de passage d'air ayant des caractéristiques de fusibilité de la manière décrite ci-dessus, comprend une étape de fracture au moins partielle, voire totale, du conduit de passage d'air 10 au niveau de l'une au moins de ses zones sécables à rupture contrôlée. Cette fracture résulte de l'application par la peau 11, elle-même pressée par le genou 15, d'un effort tranchant orienté sensiblement orthogonalement par rapport à l'orientation 17 du conduit 10 et supérieur à l'effort tranchant prédéterminé contrôlant la rupture des zones sécables. L'agencement adopte alors la configuration de la figure 7. En réalisant une telle fracture du conduit 10, la capacité de dissipation d'énergie est augmentée au moins de la quantité d'énergie nécessaire pour fournir l'effort tranchant prédéterminé de rupture des zones sécables. La sécurité des passagers est améliorée.

Enfin, l'utilisation d'un conduit de passage d'air 10 aux caractéristiques de fusibilité ne doit en aucun cas être considérée comme limitée aux exemples d'agencements décrits préalablement.

## Revendications

1. Conduit de passage d'air (10), comprenant au moins une zone sécable à rupture contrôlée configurée pour se rompre sous l'application au conduit d'un effort tranchant prédéterminé orienté sensiblement orthogonalement par rapport à l'orientation (17) du conduit (10), **caractérisé en ce qu'**il comprend des éléments de fixation par encliquetage (13) à un dispositif de chauffage, ventilation et climatisation (14), ces éléments de fixation (13) étant configurés pour se rompre sous l'application au conduit (10) d'un effort tranchant prédéterminé orienté sensiblement orthogonalement par rapport à l'orientation (17) du conduit (10), cet effort étant inférieur à l'effort tranchant prédéterminé de rupture des zones sécables.

2. Conduit de passage d'air (10) selon la revendication 1, **caractérisé en ce que** chaque zone sécable est obtenue par réduction locale de l'épaisseur d'une paroi (21) du conduit (10).

3. Conduit de passage d'air (10) selon la revendication 2, **caractérisé en ce que** les réductions locales d'épaisseur sont agencées sous forme de sillons (22) creusés dans l'épaisseur de la paroi (21) du conduit (10), notamment depuis les faces extérieures (23) du conduit (10).

4. Conduit de passage d'air (10) selon la revendication 3, **caractérisé en ce que** les sillons (22) sont agencés en quadrillage de manière à délimiter entre eux des facettes (25).

5. Conduit de passage d'air (10) selon l'une quelconque des revendications 1 à 4, **caractérisé en ce que** des zones sécables à rupture contrôlée sont prévues sur toutes les parois (21) du conduit (10), notamment réparties de manière homogène sur la totalité de chacune des parois (21).

6. Conduit de passage d'air (10) selon l'une quelconque des revendications 1 à 5, **caractérisé en ce qu'**il est formé dans une matière rigide, notamment par injection d'une matière plastique, par exemple du polypropylène.

7. Agencement pour véhicule automobile, comprenant au moins un conduit de passage d'air (10) selon l'une quelconque des revendications 1 à 6, disposé entre une peau de planche de bord (11) d'un habitacle du véhicule et une béquille d'arrêt incompressible (12), de sorte que la direction générale (16) allant de la peau de planche de bord (11) vers la béquille (12) est sensiblement orthogonale par rapport à l'orientation (17) du conduit (10).

8. Agencement pour véhicule automobile selon la revendication 7, **caractérisé en ce qu'**un jeu (18) est interposé entre la peau de planche de bord (11) et le conduit de passage d'air (10) et **en ce qu'**un jeu (20) est interposé entre le conduit de passage d'air (10) et la béquille d'arrêt incompressible (12).

9. Agencement pour véhicule automobile selon l'une des revendications 7 ou 8 et comprenant un conduit de passage d'air (10) selon l'une quelconque des revendications 1 à 6, **caractérisé en ce qu'**il comprend un dispositif de chauffage, ventilation et climatisation (14) auquel le conduit de passage d'air (10) est raccordé par une extrémité au moyen des éléments de fixation par encliquetage (13).

10. Agencement pour véhicule automobile selon l'une des revendications 7 à 9, **caractérisé en ce que** le conduit de passage d'air (10) est équipé d'au moins une nervure externe (19) orientée en direction de la peau de planche de bord (11).

11. Véhicule automobile comprenant un agencement selon l'une quelconque des revendications 7 à 10 et/ou un conduit de passage d'air (10) selon l'une des revendications 1 à 6.

12. Procédé de dissipation d'énergie transmise par un genou (15) sur une peau de planche de bord (11) d'un agencement selon l'une quelconque des revendications 7 à 10, **caractérisé en ce qu'**il comprend une étape de fracture au moins partielle du conduit de passage d'air (10) au niveau de l'une au moins de ses zones sécables à rupture contrôlée, résultant de l'application par la peau de planche de bord (10), elle-même pressée par le genou (15), d'un effort tranchant orienté sensiblement orthogonalement par rapport à l'orientation (17) du conduit (10) et supérieur à l'effort tranchant prédéterminé contrôlant la rupture des zones sécables.

13. Procédé selon la revendication 12, **caractérisé en ce qu'**il comprend les étapes préalables successives de :
- déformation et/ou déplacement de la peau de planche de bord (11), en direction de la béquille d'arrêt incompressible (12),
- entrée en contact de la peau de planche de bord (11) avec le conduit de passage d'air (10),
- rupture d'éléments de fixation par encliquetage (13) du conduit de passage d'air (10) sur un dispositif de chauffage, ventilation et climatisation (14),
- déplacement, en direction de la béquille d'arrêt incompressible (12), du conduit de passage d'air (10) entraîné par la déformation et/ou le déplacement de la peau de planche de bord (10),
- entrée en contact du conduit de passage d'air (10) avec la béquille d'arrêt incompressible (12).

## Patentansprüche

1. Luftkanal (10), umfassend mindestens eine trennbare Zone mit kontrolliertem Bruch, die dazu ausgeführt ist, unter dem Anlegen einer vorbestimmten Trennkraft an den Kanal, die im Wesentlichen orthogonal zur Ausrichtung (17) des Kanals (10) gerichtet ist, zu brechen, **dadurch gekennzeichnet, dass** er Elemente zur Rastbefestigung (13) an einer Heiz-, Belüftungs- und Klimaanlage (14) umfasst, wobei diese Befestigungselemente (13) derart ausgeführt sind, dass sie unter dem Anlegen einer vorbestimmten Trennkraft an den Kanal (10), die im Wesentlichen orthogonal zur Ausrichtung (17) des Kanals (10) gerichtet ist, brechen, wobei diese Kraft geringer als die vorbestimmte Trennkraft zum Brechen der trennbaren Zonen ist.

2. Luftkanal (10) nach Anspruch 1, **dadurch gekennzeichnet, dass** jede trennbare Zone durch lokale Verringerung der Dicke einer Wand (21) des Kanals (10) erhalten wird.

3. Luftkanal (10) nach Anspruch 2, **dadurch gekennzeichnet, dass** die lokalen Dickenverringerungen in Form von Rillen (22) vorhanden sind, die in der Dicke der Wand (21) des Kanals (10) insbesondere von den Außenseiten (23) des Kanals (10) her ausgehöhlt sind.

4. Luftkanal (10) nach Anspruch 3, **dadurch gekennzeichnet, dass** die Rillen (22) rasterförmig angeordnet sind, um zwischen sich Facetten (25) zu begrenzen.

5. Luftkanal (10) nach einem der Ansprüche 1 bis 4, **dadurch gekennzeichnet, dass** trennbare Zonen mit kontrolliertem Bruch an allen Wänden (21) des Kanals (10), insbesondere homogen auf der Gesamtheit jeder der Wände (21) verteilt, vorgesehen sind.

6. Luftkanal (10) nach einem der Ansprüche 1 bis 5, **dadurch gekennzeichnet, dass** er aus einem starren Material, insbesondere durch Kunststoffguss, beispielsweise Polypropylen, hergestellt ist.

7. Anordnung für ein Kraftfahrzeug, umfassend mindestens einen Luftkanal (10) nach einem der Ansprüche 1 bis 6, der zwischen einer Haut eines Armaturenbretts (11) eines Innenraums des Fahrzeugs und einem nicht zusammendrückbaren Stützfuß (12) angeordnet ist, so dass die allgemeine Richtung (16), die von der Haut des Armaturenbretts (11) zu dem Fuß (12) verläuft, im Wesentlichen orthogonal zur Ausrichtung (17) des Kanals (10) ist.

8. Anordnung für ein Kraftfahrzeug nach Anspruch 7, **dadurch gekennzeichnet, dass** ein Spiel (18) zwischen der Haut des Armaturenbretts (11) und dem Luftkanal (10) vorgesehen ist, und dass ein Spiel (20) zwischen dem Luftkanal (10) und dem nicht zusammendrückbaren Stützfuß (12) vorgesehen ist.

9. Anordnung für ein Kraftfahrzeug nach einem der Ansprüche 7 oder 8, umfassend einen Luftkanal (10) nach einem der Ansprüche 1 bis 6, **dadurch gekennzeichnet, dass** sie eine Heiz-, Belüftungs- und Klimaanlage (14) umfasst, an die der Luftkanal (10) mit einem Ende mit Hilfe der Elemente zur Rastbefestigung (13) angeschlossen ist.

10. Anordnung für ein Kraftfahrzeug nach einem der Ansprüche 7 bis 9, **dadurch gekennzeichnet, dass** der Luftkanal (10) mit mindestens einer äußeren Rippe (19) versehen ist, die in Richtung der Haut des Armaturenbretts (11) gerichtet ist.

11. Kraftfahrzeug, umfassend eine Anordnung nach einem der Ansprüche 7 bis 10 und/oder einen Luftkanal (10) nach einem der Ansprüche 1 bis 6.

12. Verfahren zur Verteilung der Energie, die von einem Knie (15) auf eine Haut eines Armaturenbretts (11) einer Anordnung nach einem der Ansprüche 7 bis 10 übertragen wird, **dadurch gekennzeichnet, dass** es einen Schritt der zumindest teilweisen Fraktur des Luftkanals (10) im Bereich mindestens einer seiner trennbaren Zonen mit kontrolliertem Bruch umfasst, die sich aus dem Anlegen einer Trennkraft durch die Haut des Armaturenbretts (10), die durch das Knie (15) gedrückt wird, ergibt, die im Wesentlichen orthogonal zur Ausrichtung (17) des Kanals (10) gerichtet und größer als die vorbestimmte Trennkraft, die den Bruch der trennbaren Zonen kontrolliert, ist.

13. Verfahren nach Anspruch 12, **dadurch gekennzeichnet, dass** es die folgenden aufeinanderfolgenden vorherigen Schritte umfasst:
- Verformung und/oder Verschiebung der Haut des Armaturenbretts (11) in Richtung des nicht zusammendrückbaren Stützfußes (12),
- Kontaktnahme der Haut des Armaturenbretts (11) mit dem Luftkanal (10),
- Bruch von Elementen zur Rastbefestigung (13) des Luftkanals (10) an einer Heiz-, Belüftungs- und Klimaanlage (14),
- Verschiebung des Luftkanals (10), der durch die Verformung und/oder die Verschiebung der Haut des Armaturenbretts (10) mitgenommen wird, in Richtung des nicht zusammendrückbaren Stützfußes (12),
- Kontaktnahme des Luftkanals (10) mit dem nicht zusammendrückbaren Stützfuß (12).

## Claims

1. Air passage duct (10), comprising at least one divisible area with controlled breakage configured to break under the application to the duct of a predetermined shearing force oriented substantially orthogonally relative to the orientation (17) of the duct (10), **characterized in that** it comprises elements for fastening by latching (13) to a heating, ventilation and air conditioning device (14), these fastening elements (13) being configured to break under the application to the duct (10) of a predetermined shearing force oriented substantially orthogonally relative to the orientation (17) of the duct (10), this force being less than the predetermined shearing force for breaking the divisible areas.

2. Air passage duct (10) according to Claim 1, **characterized in that** each divisible area is obtained by local reduction of the thickness of a wall (21) of the duct (10).

3. Air passage duct (10) according to Claim 2, **characterized in that** the local thickness reductions are arranged in the form of grooves (22) hollowed out in the thickness of the wall (21) of the duct (10), notably from the outer faces (23) of the duct (10).

4. Air passage duct (10) according to Claim 3, **characterized in that** the grooves (22) are arranged in grid form so as to delimit facets (25) between them.

5. Air passage duct (10) according to any one of Claims 1 to 4, **characterized in that** the divisible areas with controlled breakage are provided on all the walls (21) of the duct (10), notably uniformly distributed over all of each of the walls (21).

6. Air passage duct (10) according to any one of Claims 1 to 5, **characterized in that** it is formed in a rigid material, notably by injection of a plastic material, for example of polypropylene.

7. Layout for motor vehicle, comprising at least one air passage duct (10) according to any one of Claims 1 to 6, arranged between a dashboard skin (11) of an interior of the vehicle and a non-compressible stop strut (12), such that the general direction (16) running from the dashboard skin (11) to the strut (12) is substantially orthogonal relative to the orientation (17) of the duct (10).

8. Layout for motor vehicle according to Claim 7, **characterized in that** a gap (18) is provided between the dashboard skin (11) and the air passage duct (10) and **in that** a gap (20) is provided between the air passage duct (10) and the non-compressible stop strut (12).

9. Layout for motor vehicle according to either of Claims 7 and 8 and comprising an air passage duct (10) according to any one of claims 1 to 6, **characterized in that** it comprises a heating, ventilation and air conditioning device (14) to which the air passage duct (10) is connected by one end by means of the latching fastening elements (13).

10. Layout for motor vehicle according to one of Claims 7 to 9, **characterized in that** the air passage duct (10) is equipped with at least one outer rib (19) oriented towards the dashboard skin (11).

11. Motor vehicle comprising a layout according to any one of Claims 7 to 10 and/or an air passage duct (10) according to one of Claims 1 to 6.

12. Method for dissipating energy transmitted by a knee (15) on a dashboard skin (11) of a layout according to any one of Claims 7 to 10, **characterized in that** it comprises a step of at least partial fracture of the air passage duct (10) at at least one of its divisible areas with controlled breakage, resulting from the application by the dashboard skin (10), itself being pressed by the knee (15), of a shearing force oriented substantially orthogonally relative to the orientation (17) of the duct (10) and greater than the predetermined shearing force controlling the breaking of the divisible areas.

13. Method according to Claim 12, **characterized in that** it comprises the prior successive steps of:
- deformation and/or displacement of the dashboard skin (11), towards the non-compressible stop strut (12),
- coming into contact of the dashboard skin (11) with the air passage duct (10),
- breaking of latching fastening elements (13) of the air passage duct (10) on a heating, ventilation and air conditioning device (14),
- displacement, towards the non-compressible stop strut (12), of the air passage duct (10) driven by the deformation and/or the displacement of the dashboard skin (10),
- coming into contact of the air passage duct (10) with the non-compressible stop strut (12).
